# EUROPÄISCHE PATENTSCHRIFT

(11) **EP 3 890 944 B1**
(45) Veröffentlichungstag und Bekanntmachung des Hinweises auf die Patenterteilung: **12.07.2023**
(21) Anmeldenummer: 19809500.2
(22) Anmeldetag: 02.12.2019
(51) Int. Cl.: B29C 63/48

(54) **MITTELS 3D-DRUCK FUNKTIONALISIERTE FOLIENFLÄCHEN ZUR AUSRÜSTUNG VON WERKSTÜCKOBERFLÄCHEN**
FILM SURFACES FUNCTIONALIZED BY MEANS OF 3D PRINTING FOR THE FINISHING OF WORKPIECE SURFACES
SURFACES DE FEUILLE FONCTIONNALISÉES AU MOYEN DE L'IMPRESSION TRIDIMENSIONNELLE DESTINÉES À L'APPRÊTAGE DES SURFACES DES PIÈCES À USINER

(30) Priorität: 06.12.2018 EP 18210888
(43) Veröffentlichungstag der Anmeldung: 13.10.2021
(73) Patentinhaber: Covestro Intellectual Property GmbH & Co. KG, 51373 Leverkusen (DE)
(72) Erfinder: ACHTEN, Dirk, 51375 Leverkusen (DE); DEGIORGIO, Nicolas, 47807 Krefeld (DE); KÜNZEL, Jonas, 51381 Leverkusen (DE); BIRTH, Jari, 50825 Köln (DE); BÜSGEN, Thomas, 51377 Leverkusen (DE)
(74) Vertreter: Davepon, Björn
(86) Internationale Anmeldenummer: PCT/EP2019/083301
(87) Internationale Veröffentlichungsnummer: WO 2020/114963

(56) Entgegenhaltungen:
- CN-A- 107 522 827
- US-A1- 2015 273 757

## Beschreibung

Die vorliegende Erfindung betrifft ein Verfahren zur Funktionalisierung einer Werkstückoberfläche, umfassend die Schritte: a) Bereitstellen eines Werkstücks; b) Bereitstellen einer Folie; c) Funktionalisierung mindestens einer Folienseite durch ortsselektives Aufbringen einer Funktionalisierungszusammensetzung umfassend ein polymeres Material mittels eines 3D-Druckverfahrens in einer oder mehrerer Schichten auf einen Teil der Folienseite; d) Ausbildung eines Stoff- oder Formschlusses zwischen der Werkstückoberfläche und der in Schritt c) funktionalisierten Folie durch Kontaktieren der Folie mit mindestens einem Teil der Werkstückoberfläche, wobei der Stoff- oder Formschluss zur Werkstückoberfläche mit einer funktionalisierten Folienseite erfolgt. Die Erfindung betrifft weiterhin Werkstücke mit einer erfindungsgemäß funktionalisierten Oberfläche.

Die Vorteile einer Massenfertigung bezüglich Qualität und Kosten können insbesondere dann ausgenutzt werden, wenn baugleiche Teile in hohen Stückzahlen gefertigt werden. Nachteilig an diesem Konzept ist allerdings, dass eine Individualisierung dieser Bauteile innerhalb des bestehenden Prozesses nur unter einem hohen technischen Aufwand erfolgen kann. Aus diesem Grund werden in der Literatur viele Ansätze diskutiert, wie man möglichst effizient, auf Basis eines einmal hergestellten Standards und innerhalb getrennter Verfahrensschritte, unterschiedliche Ausgestaltungen, beispielsweise mit unterschiedlichen Funktionalitäten oder Dekoren, erreichen kann. Dieser Ansatz vereint die Vorteile einer Basis-Serienfertigung mit der gewünschten Bauteilflexibilität und bietet sich insbesondere für die Abwandlungen von Werkstückoberflächen an, da Änderungen am Grundgefüge des Bauteils verständlicherweise deutlich aufwendiger sind.

So ist es bekannt, dekorative oder funktionale Elemente mit Kunststoffbauteilen zu kombinieren, indem Folienlagen mit derartigen Elementen in Spritzgussbauteile aufgenommen werden. Innerhalb des Verfahrens wird eine Folienlage in eine Spritzgussform eingelegt und dort fixiert. Anschließend wird eine Kunststoffmasse in die Spritzgussform eingespritzt, wo sie sich mit der Folienlage verbindet und aushärtet. Solche Verfahren werden als In-Mold-Decoration-(IMD)-Verfahren bezeichnet. Nachteilig an dieser Verfahrensweise ist jedoch, dass die für den Spritzguss nötigen hohen Temperaturen und Drücke die Auswahl der möglichen Einsatzmaterialien beschränkt. Insbesondere wärmeempfindliche, elektronische Funktionselemente oder Dekore können nicht verwendet werden, da diese unter den Spritzgussbedingungen zerstört werden würden. Neben hohen Herstellkosten für die Spritzgussformen mangelt es diesen Verfahren auch an Flexibilität, da Spritzguss üblicherweise nur mit einer mehr oder minder homogenen Masse durchgeführt werden kann.

Auch in der Patentliteratur finden sich Möglichkeiten zur Veränderung von Oberflächeneigenschaften von Konsumgütern.

Die EP 011 87 96 A2 offenbart ein Innenverkleidungsteil, insbesondere für Fahrzeuge mit einem Träger, welcher sichtseitig folienkaschierte Abschnitte und mindestens einen angrenzenden, mit Stoff, Leder oder ähnlichem Material überzogenen Bereich aufweist, wobei an der Übergangsstelle zwischen Folie und Stoff im Träger eine Nut ausgebildet ist, in welche die Ränder der Folie und des Stoffes eingeschoben und dort durch Klebung und/oder Klemmung gehalten sind.

Die DE 198 149 56 A1 beschreibt ein Verfahren zur Herstellung von Kfz-Innenverkleidungen mit einem Träger, der auf der in Gebrauchslage sichtbaren Seite mit einer Folie überzogen ist, wobei zumindest einige Abschnitte zwischen der Folie und dem Träger mit Polyurethan hinterschäumt sind, wobei das Verfahren umfasst: 1) Herstellen der Folie mit Übermaß einschließlich eines Umbugs an den Rändern durch Tiefziehen oder dergleichen; 2) Beschneiden der Folie auf das gewünschte Endmaß; 3) Einsetzen des luftdurchlässigen Trägers in die Folie einschließlich Eindrücken in die umgebogenen Ränder; 4) Einlegen dieses Verbundes in das Unterteil eines Schäumwerkzeuges und Fixieren durch Vakuum; 5) Einfahren des Oberteils des Schäumwerkzeuges und dabei vollständiges Umbiegen der Ränder der Folie auf die gewünschte endgültige Form; 6) Einbringen des Polyurethans in das geschlossene Formwerkzeug zum Hinterschäumen und Verkleben der Folie auch im Bereich der gebogenen Ränder mit dem Träger.

Auch im Bereich der additiven Fertigung sind die verschiedensten Verfahren beschreiben.

Die WO 2010 049 696 A2 offenbart beispielsweise eine Vorrichtung zum Bilden eines dreidimensionalen Gegenstands durch schichtweises Hinzufügen eines Baumaterials aufweisend eine Stützkonstruktion zum Tragen des Gegenstands während des Formens und eine entfernbare metallische Grundschicht auf, die in Form eines Netzes, einer Folie, einer Folie oder einer Folie vorliegt. Die Basisschicht ist entfernbar an dem Aufbauträger befestigt.

Des Weiteren beschreibt die DE 10 2014 104 321 A1 ein Verfahren zum Herstellen eines Formkörpers mit den Schritten: a) Bereitstellen einer Folienlage; b) Aufbringen einer Kunststoffmasse in einer vorgegebenen dreidimensionalen Form auf die Folienlage mittels eines dreidimensionalen Druckverfahrens. Die US2015/273757 offenbart eine ähnliche Technologie.

Trotz der schon bekannten Verfahren im Bereich der Funktionalisierung von Werkstückoberflächen, besteht weiterhin ein gesteigertes Interesse an Verfahren, welche in der Lage sind, mit hohen Herstellgeschwindigkeiten unterschiedlichste funktional modifizierte Oberflächen bereitzustellen.

Es ist daher die Aufgabe der vorliegenden Erfindung ein flexibles und kostengünstiges Verfahren zur Herstellung funktionalisierter Werkstückoberflächen bereitzustellen.

Vorgeschlagen wird daher ein Verfahren zur Funktionalisierung von Werkstückoberflächen gemäß Anspruch 1 und nach diesem Verfahren funktionalisierte Werkstücke gemäß Anspruch 14. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß ist ein Verfahren zur Funktionalisierung einer Werkstückoberfläche, wobei das Verfahren mindestens die folgenden Schritte umfasst:
a) Bereitstellen eines Werkstücks;
b) Bereitstellen einer Folie mit mindestens zwei Folienseiten, bevorzugt mit genau zwei Folienseiten;
c) Funktionalisierung mindestens einer Folienseite durch ortsselektives Aufbringen einer Funktionalisierungszusammensetzung umfassend ein polymeres Material mittels eines 3D-Druckverfahrens in einer oder mehreren Schichten auf mindestens einen Teil der mindestens einen Folienseite;
d) Ausbildung eines Stoff- oder Formschlusses zwischen mindestens einem Teil der Werkstückoberfläche und der in Schritt c) funktionalisierten Folie durch Kontaktieren der Folie mit mindestens einem Teil der Werkstückoberfläche, wobei der Stoff- oder Formschluss zur Werkstückoberfläche mit einer funktionalisierten Folienseite erfolgt, so dass die Funktionalisierungszusammensetzung zwischen der Werkstückoberfläche und der Folie angeordnet ist.

Es hat sich herausgestellt, dass mittels des erfindungsgemäßen Verfahrens eine Vielzahl unterschiedlicher Werkstückoberflächen mit den unterschiedlichsten Funktionen versehen werden können. Das Verfahren ist dabei nicht auf spezielle Geometrien der Werkstücke beschränkt und es lassen sich mit dem erfindungsgemäßen Verfahren auch sensible mechanische oder elektrische Funktionen auf komplexe Oberflächengeometrien aufbringen. Vorteilhafterweise befinden sich die aufgebrachten Funktionalitäten zwischen der Werkstückoberfläche und der Folie, sodass diese durch die Folie von unerwünschten Umwelteinflüssen abgeschirmt werden. Es ergibt sich durch die Folie also ein mechanischer Schutz, welcher die Langlebigkeit der aufgebrachten Funktionalitäten erhöht. Dies ist insbesondere vorteilhaft gegenüber dem Stand der Technik, welcher teilweise das Aufbringen funktionaler Elemente auf die oberste Fläche des Werkstücks empfiehlt. In diesen Fällen entfällt nachteiliger Weise der mechanische Schutz durch die Folie. Ein weiterer Vorteil besteht darin, dass der Funktionalisierungsvorgang von der Herstellung des Werkstücks entkoppelt werden kann. Insofern können bestehende Standard-Herstellungsverfahren für das Werkstück weiterverwendet werden. Die Funktionalisierung wird zeitlich unabhängig von der Fertigung des Werkstücks und es können individuelle und variierende Funktionalitäten je nach Kundenwunsch bereitgestellt werden. Dies verringert die Kosten, beschleunigt die Herstellung und vermeidet eine unnötige Lagerhaltung vorgefertigter Teile.

Mittels des erfindungsgemäßen Verfahrens lässt sich eine Funktionalisierung einer Werkstückoberfläche erreichen. Werkstückoberflächen sind dabei die Oberflächen beliebiger Werkstücke, wobei die Werkstücke aus unterschiedlichen Materialien wie beispielsweise Plastik, Glas, Keramik, thermoplastische Polymere, thermoplastische Elastomere, vernetzte GummiMaterialien, Thermoset-Materialien, Verbundstoffe, Komposite, Holz, Metall, Carbon, Kork, Papier bestehen können. Dem Einsatz in unterschiedlichen Werkstückbereichen sind keine Grenzen gesetzt und so können die Werkstücke aus dem Fahrzeugbau, der Luft- und Raumfahrtechnik, dem Konsumgüterbereich, der Sicherheitstechnik etc. stammen. Geeignete Werkstücke sind beispielsweise Werkstücke mit einer Oberfläche größer als 1 cm², bevorzugt größer als 10 cm² und des Weiteren bevorzugt Werkstücke mit einer Oberfläche größer als 50 cm². Geeignete Werkstücke sind beispielsweise Armaturentafeln für die Automobiltechnik, Elektronikartikel wie beispielsweise Radios, Fernbedienungen, Lampen, Smartphones, Kleinelektroartikel wie beispielsweise Zahnbürsten, Rasierapparate etc., aber auch nicht elektronische Artikel wie Buchrücken, Handrasierer, mechanische Zahnbürsten, Bürsten oder Kombinationen aus mindestens zwei hiervon.

Die Funktionalisierung der Werkstückoberfläche beinhaltet das Hinzufügen weiterer oder zusätzlicher Elemente, welche durch einen Anwender haptisch oder optisch wahrnehmbar sind und welche das Erscheinungsbild der Werkstückoberfläche haptisch, taktil oder optisch verändern oder welche von außen erst einmal nicht wahrnehmbar sind, aber dem Werkstück neue Einsatzmöglichkeiten geben. Ein Werkstück kann beispielsweise durch das Aufkaschieren einer 3D bedruckten Folie gezielt in seiner geometrischen Ausgestaltung verändert werden (gedruckte Formen). Ein Werkstück kann durch das Aufkaschieren einer 3D bedruckten Folie gezielt in seiner Oberflächenhaptik verändert werden. (gedruckte Texturen /gedruckte Dämpfer/Schäume). Ein Werkstück kann durch das Aufbringen der 3D-bedruckten Folie in seinen mechanischen Eigenschaften, beispielsweise der mechanischen Steifheit, der Flexibilität, verändert werden. Ein Werkstück kann durch das Aufkaschieren einer 3D bedruckten Folie gezielt in seinen elektrischen Eigenschaften verändert werden. (gedruckte Leiter/ Leiterplatten, Antennenstrukturen, elektrische oder elektronische Bauelemente, Sensoren, induktive oder kapazitive Berührungssensoren, Chips, Anzeigeelemente, insbesondere LED- oder OLED- oder LCD-Anzeigeelemente). Ein Werkstück durch das Aufkaschieren einer 3D bedruckten Folie gezielt in seinen optischen Eigenschaften verändert werden. (gedruckte Linsen, optische Elemente, Schrift, Dekore, Sicherheitsmerkmale). Diese beispielhaften Funktionalitäten lassen einem Standardbauteil, einzeln oder in Summe, mit dem erfindungsgemäßen Verfahren zusätzlich verleihen.

Im Schritt a) erfolgt das Bereitstellen eines Werkstücks. Das Werkstück kann dabei so bereitgestellt werden, dass zumindest die Oberfläche des Werkstücks frei zugänglich ist. Die Werkstückoberfläche kann zudem vor oder in der Bereitstellung weiteren Verfahrensschritten wie beispielsweise einer Reinigung, einer elektrostatischen Entladung oder einer Entmagnetisierung, Temperieren auf die weiteren Schritte vorbereitet werden.

Im Schritt b) wird eine Folie bereitgestellt. Unter einer Folie wird im Kontext der Erfindung ein Halbzeug verstanden, welches in zwei Raumrichtungen eine wesentlich höhere Ausdehnung als in der dritten Raumrichtung aufweist. Unter Folie werden im Kontext der Erfindung auch flächige Halbzeuge verstanden, die sonst häufig als Textile, Gewebe, Gelege, Geflechte, Netze, Gestricke, Schäume, aber auch Polymerfolien bezeichnet werden. Erfindungswesentlich ist, dass die Folie ein Modul zu Folien-Dickenverhältnis aufweist, das dazu führt, dass die Folie ohne Materialbruch um einen 10 cm Durchmesser Kern gewickelt werden kann. Der Folien Modul wird dabei als E-Modul im Zugversuch an einem 2*10 cm Probenkörper mit einer Dicke ermittelt und liegt erfindungsgemäß in einem Bereich von 10 MPa bis 10 GPa, wobei die Foliendicke in einem Bereich von 0,01 bis 2 mm liegt. Bevorzugt ist das Produkt aus Foliendicke und Folienmodul der Folie als Dicke [mm] * Modul [MPa] < 5000, bevorzugt < 3000, besonders bevorzugt < 2000 mmMPa und die Bruchdehnung der Folie im Zugversuch > 5%, bevorzugt > 10% und ganz besonders bevorzugt > 20%, gemessen nach DIN EN ISO 527-2:2012-06. Die Folie kann dabei ein- oder mehrschichtig aus einem oder aus einem Verbund unterschiedlicher Folienmaterialien sein. Das Folienmaterial ist ein durchgängig flächiges Material gegebenenfalls auch mit Auspaarungen oder liegt als Gelege, Netz, Gewebe vor. Das Material ist bevorzugt ausgesucht aus der Gruppe beststehend aus Leder, Polymeren, Verbundwerkstoffen, Metallen, Holz oder Kombinationen aus mindestens zwei hiervon. Bevorzugt ist das Folienmaterial ausgewählt aus der Gruppe bestehend aus Polyurethan, Polycarbonat, Polyester, Polyamid, Polyetherimid, Polyetherketon, Polyimid, Polyoxymethylen, Polysilikon, thermoplastische Elastomer, Gummi, Polyvinylchlorid, Polyethylen, Polypropylen, Faserverbundwerkstoffe mit Endlosfasern oder Mischungen aus mindestens zwei hiervon oder Schichtaufbauten aus mindestens zwei hiervon. Das Folienmaterial kann durchgehend sein oder aber auch Ausnehmungen aufweisen. Das Bereitstellen der Folie beinhaltet bevorzugt ebenfalls vorbereitende Schritte wie beispielsweise das Reinigen, das Konditionieren durch Aufbringen weiterer Substanzen wie beispielsweise Lacken, elektrostatische Behandlungsschritte, Temperieren etc.. Die Folie kann partiell transparent, eingefärbt oder mit einem gedruckten Dekor versehen sein.

Im Schritt c) erfolgt die Funktionalisierung mindestens einer Folienseite durch ortsselektives Aufbringen einer Funktionalisierungszusammensetzung umfassend ein polymeres Material mittels eines 3D-Druckverfahrens in einer oder mehrerer Schichten auf einen Teil der Folienseite.

Die vorliegende Erfindung umfasst also auch in Teilen ein Verfahren zum Erzeugen einer Funktionalisierung mittels additiver Fertigung auf einer Folie. Dabei ist die herzustellende Funktionalisierung nicht grundsätzlich begrenzt. Insbesondere die additive Fertigung erlaubt es in effektiver Weise, verschiedenste Funktionalisierungen für verschiedenste Anwendungen mit unbegrenzten Geometrien erzeugen zu können. Entsprechend unterliegt auch die herzustellende Funktionalisierung keiner Begrenzung, sondern der hier beschriebene Verfahrensschritt kann grundsätzlich dazu dienen, jegliche durch ein additives Verfahren erzeugbaren Funktionalisierung zu formen. Besonders bevorzugt ist das hier beschriebene Verfahren jedoch für solche Funktionalisierungen, die eine hohe Stabilität beziehungsweise homogene mechanische Eigenschaften benötigen.

3D-Druckverfahren umfassen insbesondere additive Verfahren. Grundsätzlich kann im Rahmen dieses Verfahrensschrittes jegliches additive Verfahren verwendet werden.

Als additive Fertigungsverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und/oder auf der zu druckenden Folie erfolgt auf der Grundlage einer CAD-Zeichnung des Gegenstands. Ist die Geometrie der Funktionalisierung komplex, zum Beispiel mit geometrischen Hinterschneidungen, müssen zusätzlich Stützmaterialien mitgedruckt und nach Fertigstellung der Funktionalisierung wieder entfernt werden.

Daneben existieren additive Fertigungsverfahren, welche thermoplastische Pulver nutzen, um die gewünschten Funktionalisierungen schichtweise aufzubauen. Hierbei werden über einen so genannten "Beschichter" dünne Pulverschichten aufgetragen und anschließend mittels einer Energiequelle selektiv aufgeschmolzen. Das umgebende Pulver stützt dabei die Bauteilgeometrie. Komplexe Funktionalisierungen sind dadurch wirtschaftlicher zu fertigen als beim zuvor beschrieben FDM-Verfahren. Zudem können verschiedene Funktionalisierungen eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren, wie etwa in der EP 1 648 686 beschrieben, erfolgt der Energieeintrag über Infrarot (IR)-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen.

Direkt-Pulvererfahren-Pulverbett-Systeme sind als Laserschmelzverfahren bekannt, beispielsweise Selektives Laserschmelzen (SLM), Laser-Cusing und Direkt-Metall-Laser-Sintern (DMLS). Die einzige Ausnahme von diesem Verfahrensprinzip ist der Elektronenstrahlschmelzprozess (EBM), bei dem ein Elektronenstrahl unter Vollvakuum verwendet wird.

Ein anderes System, das ein Pulverbett verwendet, ist das Höganäs-Digital-Metal-Verfahren. Dieses System verwendet einen Präzisions-Inkjet, um eine spezielle "Tinte" auf einer 45 µm dicken Schicht aus Metallpulver abzuscheiden. Eine weitere Pulverschicht von 45 Mikrometern wird aufgetragen und der Druckschritt wird wiederholt, bis die Komponente vollständig ist. Das Teil wird dann entbunden und gesintert, um die endgültige Größe und Festigkeit zu erreichen. Einer der Vorteile dieses Systems besteht darin, dass der Aufbau bei Raumtemperatur ohne das teilweise Schmelzen erfolgt, dass mit der Laser- oder Elektronenstrahltechnologie auftritt. Grundsätzlich sind während des Baus auch keine Stützstrukturen erforderlich, da diese durch das Pulverbett unterstützt werden.

Obwohl Systeme mit Pulverzufuhr das gleiche Ausgangsmaterial verwenden, unterscheidet sich die Art und Weise, in der das Material Schicht für Schicht hinzugefügt wird, beträchtlich. Das Pulver fließt durch eine Düse, wobei es durch einen Strahl direkt auf der Oberfläche des behandelten Teils geschmolzen wird.

Systeme mit Pulverzuführung werden auch als Laser-Plattierung (Laser Cladding), gerichtete Energieabscheidung (Directed Energy Deposition) und Laser-Metallabscheidung (Laser Metal Deposition) bezeichnet. Das Verfahren ist hochpräzise und basiert auf einer automatisierten Abscheidung einer Materialschicht mit einer Dicke zwischen 0,1 mm und mehreren Zentimetern. Die metallurgische Verbindung des Ummantelungsmaterials mit dem Grundmaterial und die Abwesenheit von Untergrabungen sind einige Merkmale dieses Verfahrens. Der Prozess unterscheidet sich von anderen Schweißtechniken dadurch, dass ein geringer Wärmeeintrag die Folie durchdringt. So können auch sehr thermosensitive Folien verarbeitet werden.

Eine Entwicklung dieser Technologie ist das Laser Engineered Net Shaping (LENS) Pulverzufuhrsystem. Diese Methode erlaubt das Hinzufügen von Material zu einem bereits vorhandenen Teil auf der Folie.

Es lassen sich ebenfalls ADAM (Atomic Diffusion Additive Manufacturing) mit unterschiedlichen Metallpulvern verwenden. Dazu wird das Pulver in Kunststoff-Bindemittel Schicht für Schicht in Form gebracht. Nach dem Drucken wird die Funktionalisierung zusammen mit der Folie in einem Ofen gesintert, der das Bindemittel abbrennt und das Pulver in Ihr endgültiges, volldichtes Metallteil verfestigt.

Zusammenfassend umfassen beispielhafte additive Verfahren, die im Rahmen dieses Verfahrensschrittes anwendbar sind, die vorstehend Beschriebenen. Geeignet sind somit beispielsweise High Speed Sintern, selektives Laserschmelzen, selektives Lasersintern, Selective Heat Sintering, Binder Jetting, Elektronenstrahlschmelzen, Fused Deposition Modeling, Fused Filament Fabrication, Auftragschweißen, Rührreibschweißen, Wax Deposition Modeling, Contour Crafting, Metall-Pulver-Auftragsverfahren, Kaltgasspritzen, Elektronenstrahlschmelzen, Stereolithographie, 3D-Siebdruckverfahren, lichtgesteuerte elektrophoretische Abscheidung, Druck von mit Metallpulver hochgefüllten Thermoplasten nach dem FDM Verfahren, Nano Metallpulver im Inkjetverfahren, DLP (Direct Light Processing), Inkjetting, Continuous Light Interface Processing (CLIP). Diese Verfahren lassen sich zum Aufbringen der Funktionalisierungszusammensetzung im Schritt c) verwenden.

Zum Aufbringen der Funktionalisierungszusammensetzung lassen sich auch Flächenverfahren verwenden. In diesen wird ebenso wie im Stereolithografie-Verfahren eine Photopolymer-Lösung belichtet. Dabei erfolgt die Belichtung aber nicht punktuell über einen Laserstrahl, sondern flächig. Dazu wird eine Belichtungsmatrix auf die jeweilige Schicht projiziert um das Material an diesen Stellen auszuhärten.

Bei dem DLP-Verfahren (Digital Light Processing) wird ein Punktraster auf die Photopolymerfläche von ober projiziert und die Bauplattform sinkt Schicht für Schicht in die Lösung ein. Vorteil dieses Verfahrens ist, dass durch unterschiedlich starke Belichtung auch die Aushärtung variiert werden kann. Dadurch können zum Beispiel Stützkonstruktionen leichter entfernt werden, wenn diese weniger ausgehärtet sind.

Bei dem als LCM (Lithography-based Ceramic Manufacturing) bezeichneten 3D Druck wird das Photopolymerbad nicht von oben, sondern von unten belichtet. Speziell wird dieses Verfahren angewandt, um ein Gemisch aus festen Bestandteilen (Keramik) und einer Photopolymerlösung zu belichten. Der so entstehende Grünling wird nach dem 3D Druck gesintert und der Binder ausgebrannt. Vorteil dieses 3D Druckverfahrens ist die Möglichkeit, unterschiedliche Granulate einzusetzen.

Mit der CLIP (Continuous Liquid Interface Production) Technologie können Objekte ohne sichtbare Schichten hergestellt werden. Die Photopolymerisation des flüssigen Harzes wird mittels Abstimmung von UV-Licht (Aushärtung) und Sauerstoff (verhindert Aushärtung) gesteuert. Der Boden es Harztanks besteht aus einem licht- und luftdurchlässigen Material, ähnlich dem von Kontaktlinsen. Dadurch kann in der untersten Schicht eine sogenannte "dead zone" mittels Sauerstoff erzeugt werden, die den weiteren Aufbau des Objekts ermöglicht, das kontinuierlich aus dem Becken nach oben gezogen wird.

Bei der Stereolithographie (SLA-Verfahren) wird ein lichtaushärtender Kunststoff, der auch als Photopolymer bezeichnet wird, von einem Laser in dünnen Schichten ausgehärtet. Das Verfahren geschieht in einem Schmelzbad, das mit den Basismonomeren des lichtempfindlichen (photosensitiven) Kunststoffes gefüllt ist. Nach jedem Schritt wird das Werkstück einige Millimeter in das Bad abgesenkt und auf eine Position zurückgefahren, die um den Betrag einer Schichtstärke unter der vorherigen liegt.

Das in diesem Schritt genutzte 3D-Druckverfahren zum Erzeugen einer Funktionalisierung mittels additiver Fertigung umfasst zunächst einen Schritt, bei dem die Funktionalisierung durch ein mehrmaliges schichtweises und entsprechend einem Querschnitt der Funktionalisierung räumlich selektives Anordnen, insbesondere Aufbringen und/oder Aufschmelzen und/oder Polymerisieren und/oder Verkleben, wenigstens einer Funktionalisierungszusammensetzung auf der Folie erzeugt wird.

Insbesondere, kann als additives Verfahren ein Verfahren verwendet werden, das mittels der Inkjet-Technologie arbeitet. Beispielhaft kann hier das Binder Jetting genannt werden.

Weiterhin kann als Funktionalisierungszusammensetzung grundsätzlich jegliches Material verwendet werden, das mittels eines additiven Verfahrens verarbeitet werden kann. Somit kann als Material beispielsweise jegliches Material verwendet werden, das sich unter geeigneten Bedingungen aufschmelzen lässt und das wieder erstarrt. Ferner kann nur eine Funktionalisierungszusammensetzung verwendet werden oder es kann eine Materialmischung verwendet werden oder es können mehrere Funktionalisierungszusammensetzungen verwendet werden. Werden mehrere Funktionalisierungszusammensetzungen verwendet, können diese in unterschiedlichen Schichten oder auch in denselben Schichten angeordnet werden.

Grundsätzlich kann die Funktionalisierungszusammensetzung in Pulverform auf der Folie vorliegen oder auch in bereits geschmolzener Form auf die Folie aufgebracht werden.

Unter Stoff- oder Formschluss zwischen der Werkstückoberfläche und der Oberfläche der in Schritt c) funktionalisierten Folie, wird gemäß der Erfindung eine Verbindung zwischen den beiden Oberflächen verstanden, sodass die beiden Oberflächen nur bevorzugt nicht ohne Anwendung erheblicher Kräfte voneinander getrennt werden können. Im Speziellen wird unter Stoffschluss sowohl ein chemischer Stoffschluss oder ein physikalischer Stoffschluss verstanden. Unter Formschluss wird eine Verbindung zwischen den Oberflächen unter Verzahnung der Oberflächen verstanden. Bevorzugt erfolgt die Verzahnung durch Verformung der Oberflächen. Bevorzugt wird eine Haftkraft zwischen den beiden Oberflächen von ≥ 0,1 N/mm, bevorzugt ≥ 0,3 N/mm, bevorzugt ≥ 0,5 N/mm erhalten, gemessen gemäß DIN ISO 55529:2012-09.

In einer vorteilhaften Ausführungsform des erfindungsgemäßen Verfahrens ist es vorgesehen, dass wenigstens ein Teil der Funktionalisierungszusammensetzung ein schmelzbares Polymer aufweist. Vorzugsweise weist die gesamte Funktionalisierungszusammensetzung ein schmelzbares Polymer auf. Es ist ferner bevorzugt das das schmelzbare Polymer partikulär vorliegt, wobei mindestens 90 Gewichts-% der Partikel einen Teilchendurchmesser von ≤ 0.25 mm, bevorzugt ≤ 0.2 mm, besonders bevorzugt ≤ 0.15 mm aufweisen. Die Partikel mit dem schmelzbaren Polymer können beispielsweise homogen aufgebaut sein, so dass keine weiteren schmelzbaren Polymere in den Partikeln vorliegen.

Geeignete Funktionalisierungszusammensetzungen können über verschiedene gängige Prozesse hergestellt werden wie zum Beispiel Mahlprozesse, Kryo-Mahlen, Fällungsprozesse, Sprühtrocknungsprozesse und andere.

Neben dem schmelzbaren Polymer enthält die Funktionalisierungszusammensetzung bevorzugt noch weitere Additive wie Füllstoffe, Stabilisatoren und dergleichen, aber auch weitere Polymere. Der Gesamtgehalt an Additiven in den Partikeln kann beispielsweise ≥ 0,1 Gewichts-% bis ≤ 60 Gewichts-%, bevorzugt ≥ 1 Gewichts-% bis ≤ 40 Gewichts-%, betragen.

In einer bevorzugten Ausführungsform umfasst die Funktionalisierungszusammensetzung ein schmelzbares Polymer ausgewählt aus: Polyetheretherketon (PEEK), Polyaryletherketon (PAEK), Polyetherketoneketon (PEKK), Polyethersulfone, Polyimid, Polyetherimid, Polyester, Polyamide, Polycarbonate, Polyurethane, Polyvinylchlorid, Polyoxymethylen, Polyvinylacetat, Polyacrylate, Polymethacrylate, TPE (Thermoplastische Elastomere), Thermoplaste wie Polyethylen, Polypropylen, Polylactid, ABS (Acrylnitril-Butadien-Styrol-Copolymere), PETG (ein mit Glycol modifiziertes Polyethylenterephtalat) oder auch Polystyrol, Polyethylen, Polypropylen und Abmischungen und / oder Legierungen mindestens zweier der genannten Polymere.

Vorzugsweise umfasst die Funktionalisierungszusammensetzung ein Polyurethan, das zumindest anteilsmäßig erhältlich ist aus der Reaktion von aromatischen und/oder aliphatischen Polyisocyanaten mit geeigneten (Poly)alkoholen und/oder (Poly)aminen oder deren Abmischungen. Bevorzugt werden zumindest anteilsmäßig als (Poly)alkohole solche aus der Gruppe bestehend aus: lineare Polyesterpolyole, Polyetherpolyole, Polycarbonatpolyole, Polyacrylatpolyole oder einer Kombination aus mindestens zwei hiervon eingesetzt. In einer bevorzugten Ausführungsform tragen diese (Poly)alkohole oder (Poly)amine endständige Alkohol- und/oder Amin-Funktionalitäten. In einer weiteren bevorzugten Ausführungsform haben die (Poly)alkohole und oder (Poly)amine ein Molekulargewicht von 52 bis 10000 g/mol. Bevorzugt haben diese (Poly)alkohole oder (Poly)amine als Einsatzstoffe einen Schmelzpunkt im Bereich von 5 bis 150 °C. Bevorzugte Polyisocyanate, die zumindest anteilmäßig zur Herstellung der schmelzbaren Polyurethane verwendet werden können, sind TDI, MDI, HDI, PDI, H12MDI, IPDI, TODI, XDI, NDI und Decandiisocyanat. Besonders bevorzugte Polyisocyanate sind HDI, PDI, H12MDI, MDI und TDI.

Es ist ebenfalls bevorzugt, dass die Funktionalisierungszusammensetzung ein Polycarbonat auf Basis von Bisphenol A und/oder oder Bisphenol TMC umfasst.

Alternativ kann es vorgesehen sein, dass die Funktionalisierungszusammensetzung ein Metall ist. In dieser Ausgestaltung können die Anwendungsgebiete der funktionalisierten Werkstücke in der Medizintechnik, im Luftfahrtbereich, im Automotive-Bereich oder im Bereich der Schmuckherstellung liegen. Geeignete Metalle für die Funktionalisierungszusammensetzung umfassen etwa Werkzeugstähle, Maraging-Stähle beziehungsweise martensitaushärtende Stähle, Edelstahl, Aluminium oder Aluminiumlegierungen, Cobalt-Chrom-Legierungen, Nickel-basierte Legierungen, wie etwa Superlegierungen, Titan und Titanlegierungen etwa in kommerzieller Reinheit, Kupfer und Kupferlegierungen oder Edelmetalle, wie etwa Gold, Platin, Palladium, Silber. Im erfindungsgemäßen Verfahren wird die Funktionalisierung schichtweise aufgebaut. Ist die Anzahl der Wiederholungen für Auftragen und Bestrahlen hinreichend gering, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für Auftragen und Bestrahlen durchgeführt werden.

Ein Verfahren zur Herstellung einer Funktionalisierung auf einer Folie umfasst bevorzugt beispielsweise die Schritte:
I) Abscheiden eines radikalisch vernetzten Harzes auf der Folie so dass eine Lage eines mit der Folie verbundenen Aufbaumaterials erhalten wird;
II) Abscheiden eines radikalisch vernetzten Harzes auf eine zuvor aufgetragene Lage des Aufbaumaterials, so dass eine weitere Lage des Aufbaumaterials erhalten wird, welche mit der zuvor aufgetragenen Lage verbunden ist;
III) Wiederholen des Schritts II), bis die Funktionalisierung gebildet ist;
   wobei das Abscheiden eines radikalisch vernetzten Harzes wenigstens in Schritt II) durch Belichten und/oder Bestrahlen eines ausgewählten Bereichs eines radikalisch vernetzbaren Harzes, entsprechend dem jeweils ausgewählten Querschnitt der Funktionalisierung, erfolgt.

In dieser Ausgestaltung kann weiterhin nach Schritt III) gegebenenfalls ein weiterer Schritt IV) durchgeführt werden:
IV) Behandeln der nach Schritt III) erhaltenen Funktionalisierung bei Bedingungen, die ausreichen, um im radikalisch vernetzten Harz eine Nachvernetzung zu erhalten durch die Einwirkung weiterer actinischer Strahlung und/oder thermisch induzierte Nachhärtung.

In dieser Ausgestaltung wird somit die Funktionalisierung in zwei Herstellungsabschnitten erhalten. Der erste Herstellungsabschnitt kann als Aufbauabschnitt angesehen werden. Dieser Aufbauabschnitt lässt sich mittels strahlenoptischer additiver Fertigungsverfahren wie dem Inkjet-Verfahren, der Stereolithographie oder dem DLP (digital light processing)-Verfahren realisieren und ist Gegenstand der Schritte I), II) und III). Der zweite Herstellungsabschnitt kann als Härtungsabschnitt angesehen werden und ist Gegenstand des Schritts IV). Hier wird die nach dem Aufbauabschnitt erhaltene Funktionalisierung ohne seine Form weiter zu verändern in einen mechanisch dauerhafteren Gegenstand überführt.

In Schritt I) der Ausgestaltung erfolgt das Abscheiden eines radikalisch vernetzten Harzes auf der Folie. Dieses ist gewöhnlich der erste Schritt in Inkjet-, Stereolithographie- und DLP-Verfahren. Auf diese Weise wird eine Lage eines mit der Folie verbundenen Aufbaumaterials erhalten, welche einem ersten ausgewählten Querschnitt des Vorläufers entspricht.

Gemäß Schritt III) wird Schritt II) so lange wiederholt, bis die gewünschte Funktionalisierung gebildet ist. Bevorzugt erfolgt Schritt III) in einem Bereich von 2 bis 10000, bevorzugt in einem Bereich von 3 bis 1000, mehr bevorzugt in einem Bereich von 5 bis 500, besonders bevorzugt in einem Bereich von 10 bis 100 Wiederholungen. In Schritt II) erfolgt das Abscheiden eines radikalisch vernetzten Harzes auf eine zuvor aufgetragene Lage der Funktionalisierungszusammensetzung, so dass eine weitere Lage der Funktionalisierungszusammensetzung erhalten wird, welche einem weiteren ausgewählten Querschnitt der Funktionalisierung entspricht und welche mit der zuvor aufgetragenen Lage verbunden ist. Bei der zuvor aufgetragenen Lage der Funktionalisierungszusammensetzung kann es sich um die erste Lage aus Schritt I) oder um eine Lage aus einer vorigen Durchlauf des Schritts II) handeln.

Es ist erfindungsgemäß vorgesehen, dass das Abscheiden eines radikalisch vernetzten Harzes wenigstens in Schritt II) (vorzugsweise auch in Schritt I) durch Belichten und/oder Bestrahlen eines ausgewählten Bereichs eines radikalisch vernetzbaren Harzes, entsprechend dem jeweils ausgewählten Querschnitt der Funktionalisierung erfolgt. Dieses kann sowohl durch selektives Belichten (Stereolithographie, DLP) des Harzes als auch durch selektives Auftragen des Harzes, gefolgt von einem Belichtungsschritt, der aufgrund des vorigen selektiven Auftragens des Harzes nicht mehr selektiv sein muss (Inkjet-Verfahren).

Im Kontext der vorliegenden Erfindung werden die Begriffe "radikalisch vernetzbares Harz" und "radikalisch vernetztes Harz" benutzt. Hierbei wird das radikalisch vernetzbare Harz durch das Belichten und/oder Bestrahlen, welches radikalische Vernetzungsreaktionen auslöst, in das radikalisch vernetzte Harz überführt. Unter "Belichten" wird hierbei die Einwirkung von Licht im Bereich zwischen nahem IR- und nahem UV-Licht (1400 nm bis 315 nm Wellenlänge) verstanden. Die übrigen kürzeren Wellenlängenbereiche werden durch den Begriff "Bestrahlen" abgedeckt, zum Beispiel fernes UV-Licht, Röntgenstrahlung, Gammastrahlung und auch Elektronenstrahlung.

Das Auswählen des jeweiligen Querschnitts erfolgt zweckmäßigerweise durch ein CAD-Programm, mit dem ein Modell der herzustellenden Funktionalisierung erzeugt wurde. Diese Operation wird auch "Slicing" genannt, und dient als Grundlage für die Steuerung der Belichtung und/oder Bestrahlung des radikalisch vernetzbaren Harzes.

Das radikalisch vernetzbare Harz weist bevorzugt eine Viskosität (23 °C, DIN EN ISO 2884-1) von ≥ 5 mPas bis ≤ 100000 mPas auf. Somit ist es zumindest für die Zwecke der additiven Fertigung als flüssiges Harz anzusehen. Vorzugsweise beträgt die Viskosität ≥ 50 mPas bis ≤ 10000 mPas, mehr bevorzugt ≥ 500 mPas bis ≤ 1000 mPas.

Neben den härtbaren Komponenten kann das radikalisch vernetzbare Harz auch eine nicht härtbare Komponente umfassen, in der beispielsweise Stabilisatoren, Füllstoffe und dergleichen zusammengefasst sind.

Das Behandeln in Schritt IV) kann im einfachsten Fall ein Lagern bei Raumtemperatur (20 °C) sein. Es ist auch bevorzugt möglich, bei einer Temperatur oberhalb der Raumtemperatur zu lagern.

Es ist bevorzugt, dass Schritt IV) erst dann durchgeführt wird, wenn die gesamte Funktionalisierung seinen Gelpunkt erreicht hat. Der Gelpunkt wird als erreicht angesehen, wenn in einer dynamisch-mechanischen Analyse (DMA) mit einem Platte/Platte-Oszillationsviskosimeter gemäß ISO 6721-10 bei 20 °C sich die Graphen des Speichermoduls G` und des Verlustmoduls G" kreuzen. Gegebenenfalls wird der Vorläufer weiterer Belichtung und/oder Bestrahlung zur Vervollständigung der radikalischen Vernetzung ausgesetzt. Das radikalisch vernetzte Harz kann ein Speichermodul G` (DMA, Platte/Platte-Oszillationsviskosimeter gemäß ISO 6721-10 bei 20 °C und einer Scherrate von 1/s) von ≥ 10⁶ Pa aufweisen.

Das radikalisch vernetzbare Harz kann weiterhin Additive wie Füllstoffe, UV-Stabilisatoren, Radikalinhibitoren, Antioxidantien, Formtrennmittel, Wasserfänger, Slipadditive, Entschäumer, Verlaufsmittel, Rheologieadditive, Flammschutzmittel und/oder Pigmente enthalten. Diese Hilfs- und Zusatzmittel, ausgenommen Füllstoffe und Flammschutzmittel, liegen üblicherweise in einer Menge von weniger als 10 Gew.-%, vorzugsweise weniger als 5 Gew.-%, besonders bevorzugt bis zu 3 Gew.-%, bezogen auf das radikalisch vernetzbare Harz vor. Flammschutzmittel liegen üblicherweise in Mengen von höchstens 70 Gew.-%, vorzugsweise höchstens 50 Gew.-%, besonders bevorzugt höchstens 30 Gew.-%, berechnet als Gesamtmenge an eingesetzten Flammschutzmitteln bezogen auf das Gesamtgewicht des radikalisch vernetzbaren Harzes vor.

Geeignete Füllstoffe sind beispielsweise AlOH₃, CaCOs, Metallpigmente wie TiOz und weitere bekannte übliche Füllstoffe. Diese Füllstoffe werden vorzugsweise in Mengen von höchstens 70 Gew.-%, bevorzugt höchstens 50 Gew.-%, besonders bevorzugt höchstens 30 Gew.-%, berechnet als Gesamtmenge an eingesetzten Füllstoffen bezogen auf das Gesamtgewicht des radikalisch vernetzbaren Harzes, eingesetzt.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-suberat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1 -phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5 -(1,1 -dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutyl-ester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten Lichtstabilisatoren können sowohl einzeln als auch in beliebigen Kombinationen untereinander zum Einsatz kommen.

Besonders bevorzugte UV-Stabilisatoren sind solche, die Strahlung einer Wellenlänge < 400 nm vollständig absorbieren. Hierzu zählen beispielsweise die genannten Benztriazolderivate. Ganz besonders bevorzugte UV-Stabilisatoren sind 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol und/oder 2-(5-Chlor-2H-benzotriazol-2-yl)-4,6-bis(1,1-dimethylethyl)phenol.

Gegebenenfalls werden ein oder mehrere der beispielhaft genannten UV-Stabilisatoren dem radikalisch vernetzbaren Harz vorzugsweise in Mengen von 0,001 bis 3,0 Gew.-%, besonders bevorzugt 0,005 bis 2 Gew.-%, berechnet als Gesamtmenge an eingesetzten UV-Stabilisatoren bezogen auf das Gesamtgewicht des radikalisch vernetzbaren Harzes, zugesetzt.

Geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thiodiethyl-bis[3-(3,5-ditert-butyl-4-hydroxyphenyl)propionat]. Diese können bei Bedarf sowohl einzeln als auch in beliebigen Kombinationen untereinander eingesetzt werden. Diese Antioxidantien werden vorzugsweise in Mengen von 0,01 bis 3,0 Gew.-%, besonders bevorzugt 0,02 bis 2,0 Gew.-%, berechnet als Gesamtmenge an eingesetzten Antioxidantien bezogen auf das Gesamtgewicht des radikalisch vernetzbaren Harze, eingesetzt.

Geeignete Radikalinhibitoren bzw. Verzögerer sind besonders solche, die eine unkontrollierte radikalische Polymerisation der Harzformulierung außerhalb des gewünschten (bestrahlten) Bereiches gezielt inhibieren. Diese sind für eine gute Randschärfe und Abbildungsgenauigkeit im Vorläufer entscheidend. Geeignete Radikalinhibitoren müssen entsprechend der gewünschten Radikalausbeute aus dem Bestrahlungs-/Belichtungsschritt und der Polymerisationsgeschwindigkeit und Reaktivität/Selektivität der Doppelbindungsträger ausgesucht werden. Geeignete Radikalinhibitoren sind z. B. 2,2-(2,5-thiophendiyl)bis(5-tertbutylbenzoxazol), Phenothiazin, Hydrochinone, Hydrochinonether, Quinonalkyde und Nitroxylverbindungen sowie Mischungen davon, Benzoquinone, Kupfer Salze, Brenzcatechine, Cresole, Nitrobenzol und Sauerstoff. Diese Antioxidantien werden vorzugsweise in Mengen von 0,001 Gew.-% bis 3 Gew.-% eingesetzt.

Im Schritt d) erfolgt die Ausbildung eines Stoff- oder Formschlusses zwischen der Werkstückoberfläche und der in Schritt c) funktionalisierten Folie bevorzugt durch Kontaktieren mit mindestens einem Teil der Werkstückoberfläche, bevorzugt durch Pressen der Folie mit dem mindestens einen Teil der Werkstückoberfläche, wobei der Stoff- oder Formschlusses zur Werkstückoberfläche mit einer funktionalisierten Folienseite erfolgt. Bei dem Kontaktieren oder Pressen der Folie mit mindestens einem Teil der Werkstückoberfläche findet bevorzugt zumindest ein teilweises Verformen der Folie statt. Erfindungsgemäß ist die Funktionalisierung nach diesem Schritt also zwischen der Werkstückoberfläche und der Folie angeordnet, sodass die Funktionalisierung vor Umwelteinflüssen weitgehend geschützt vorliegt. Insbesondere ist nicht erfindungsgemäß, dass die Funktionalisierung auf der Folienoberseite zur Umwelt oder zu einem Nutzer hin gewandt vorliegt. Letztere Ausgestaltung gilt nur für die Fälle, in denen die Folie mit nur einer Funktionalisierung versehen ist. Wurden beide Folienseiten mit einer Funktionalisierung versehen, so kann erfindungsgemäß eine der Funktionalisierungen zwischen Folie und Werkstückoberfläche und die andere Funktionalisierung auf der Folie zum Nutzer gewandt vorliegen.

Das Kontaktieren, der Folie mit einem Teil der Werkstückoberfläche wird bevorzugt mittels üblicher Verfahren nur unter Aufwendung mechanischer Kräfte oder durch eine Kombination von mechanischen Kräften und einer thermischen und/oder chemischen Behandlung durchgeführt, was auch als Pressen bezeichnet werden kann. Bei dem Kontaktieren der Folie mit mindestens einem Teil der Werkstückoberfläche oder Pressen der Folie auf mindestens einen Teil der Werkstückoberfläche findet bevorzugt zumindest ein teilweises Verformen der Folie statt. In den einfachsten Fällen ist ein inniges in-Kontaktbringen von funktionalisierter Folie und Werkstückoberfläche ausreichend, um eine ausreichende Haftung zwischen beiden zu erreichen. Die Haftung zwischen beiden kann zusätzlich dadurch gesteuert werden, dass die Werkstückoberfläche oder die funktionalisierte Folie auf eine bestimmte Temperatur erwärmt oder erhitzt werden, sodass entweder ein innigerer mechanischer Kontakt zwischen beiden oder aber eine bessere intermolekulare Wechselwirkung zwischen den Polymermolekülen der funktionalisierten Folie und der Werkstückoberfläche möglich ist. Die Haftung zwischen beiden Elementen kann beispielsweise noch durch weitere mechanische Halteelemente, wie beispielsweise Klemmen, Halter oder ähnliches, gefördert werden. Die Haftung zwischen beiden Elementen kann darüber hinaus durch einen Klebstoffauftrag auf mindestens einer der beiden Seiten, Rückseite der funktionalisierten Folie und / oder Werkstück weiter verbessert werden. Der Klebstoff kann ebenfalls über ein 3D-Druckverfahren aufgebracht werden.

In einer bevorzugten Ausgestaltung des Verfahrens liegt die Wärmeformbeständigkeitstemperatur (HDT) gemessen nach DIN EN ISO 75-1 bis 3 Verfahren B der gedruckten Funktionalisierungszusammensetzung ≥ 5°C und ≤ 200°C höher als die Wärmeformbeständigkeitstemperatur der Folie. Zum Erhalt einer möglichst festen Haftung zwischen Funktionalisierungszusammensetzung und Folienunterseite hat es sich als besonders geeignet erwiesen, dass eine bestimmte Relation in der Wärmeformbeständigkeitstemperatur zwischen beiden Polymerzusammensetzungen eingehalten wird. Zum einen lässt sich unter dem oben angegebenen Temperatururbereich eine gute Haftung zwischen Funktionalisierungszusammensetzung und Folie für viele Materialpaarungen erzielen. Zum anderen wird die mechanische Stabilität der Folie durch den Aufbringprozess der Funktionalisierungszusammensetzung nicht gefährdet. Weiterhin ergibt sich durch oben angegebenen Bereich eine homogene Aufbringung funktionalisierter und nicht funktionalisierter Folienbereiche auf die Werkstückoberfläche. Letzteres insbesondere in Formprozessen, welche thermische Verfahrensschritte beinhalten. Besonders bevorzugt kann die Wärmeformbeständigkeitstemperatur der gedruckten Funktionalisierungszusammensetzung ≥ 10°C und ≤ 70°C, des Weiteren bevorzugt ≥ 20°C und ≤ 50°C höher liegen als die Wärmeformbeständigkeitstemperatur der Folie.

In einer bevorzugten Ausführungsform des Verfahrens ist die Folie zur Funktionalisierung in Schritt c) plan ausgerichtet. Zum Erhalt einer möglichst gleichmäßigen Funktionalisierung und zur Realisierung möglichst hoher Herstellgeschwindigkeiten, hat sich eine plane Ausrichtung der Folie als besonders geeignet herausgestellt. Überraschenderweise lassen sich funktionale Werkstücke erhalten, auch wenn die Geometrie der Werkstückoberfläche deutlich von einer planen Geometrie abweicht. Die möglicherweise vorhandenen Verzerrungen und Krümmungen der Werkstückoberfläche können wohl durch das erfindungsgemäße Verfahren in vielen Fällen kompensiert werden, sodass eine Anpassung der Folien- auf die Werkstückgeometrie auch in Anbetracht der Funktionalisierung im planen Zustand nicht unbedingt nötig ist. Dies kann hochwahrscheinlich auf den Schutz und die mechanisch flexible Einbettung der Funktionalisierung zurückgeführt werden. Diese kann wohl einen Teil der möglicherweise auftretenden Kräfte während des Aufbringungsprozesses auf deutlich abweichende Werkstückoberflächengeometrien kompensieren.

In einer bevorzugten Ausgestaltung des Verfahrens wird die Folie vor der Funktionalisierung in Schritt c) über eine Form gespannt, wobei die Formoberfläche eine Spiegelsymmetrie zur Werkstückoberfläche aufweist. Zur Anpassung der Funktionalisierung auf komplexe Werkstückoberflächen mit einer von einer planen deutlich abweichenden Geometrie, hat es sich als geeignet herausgestellt, dass der 3D-Druck auf einer adaptierten, zumindest in Teilbereichen nicht planen Folienseite durchgeführt wird. Die Funktionalisierung erfolgt also auf einer Folienseite, welche spiegelsymmetrisch zur Werkstückoberfläche ist. Da das Aufbringen der funktionalisierten Folie mit der Funktionalisierungszusammensetzung in Richtung auf die Werkstückoberfläche erfolgt, ergibt sich eine angepasste Symmetrie für die Funktionalisierung. Auf diese Art können schwierig zu funktionalisierende Stellen an der Werkstückoberfläche, wie beispielsweise Sprünge und Kanten, sicher funktionalisiert werden. Auch das anschließende Anbringen der Folie auf die Werkstückoberfläche führt dann nicht zu einer übermäßigen mechanischen Belastung der Funktionalisierungszusammensetzung.

In einem weiteren Aspekt des Verfahrens ist die Schichtdicke der abgelegten Funktionalisierungszusammensetzung bevorzugt größer als die Schichtdicke der Folie. Durch den mechanischen Schutz der Funktionalisierungszusammensetzung zwischen der Folie und der Werkstückoberfläche können auch höhere Funktionalisierungszusammensetzungen gedruckt werden, ohne dass die Gefahr einer starken mechanischen Schädigung der Funktionalisierung auftritt. Letzteres ist insbesondere im Stand-der-Technik gegeben, welche die Funktionalisierung auf der Folienoberseite anbringt. Eine höhere Funktionalisierungsdicke kann zu deutlich besseren mechanischen, optischen und Funktionalisierungseigenschaften insgesamt führen. So kann beispielsweise mehr Strom durch deutlich dickere und höher gedruckte Strukturen transportiert werden. Des Weiteren ist die haptische Wahrnehmbarkeit höherer im Vergleich zu flacheren Strukturen durch die Folie hindurch deutlich eher gegeben. Dies kann zu einer besseren Benutzerfreundlichkeit beitragen.

Nach einer bevorzugten Charakteristik des Verfahrens wird die Folie durch einen thermischen Verfahrensschritt während oder vor der Funktionalisierung im Schritt c) auf eine Temperatur T bezogen auf die Glasübergangstemperatur der Folie (T_{g}) temperiert, die in einem Bereich von ≥ -50°C und ≤ +150°C liegt, was bedeutet, dass die Temperatur T in einem Bereich 50°C unterhalb T_{g} bis 200°C oberhalb T_{g} liegt. Für die mechanische Haftung der Funktionalisierungszusammensetzung hat es sich als besonders geeignet herausgestellt, dass die Folie vor dem Aufdrucken der Funktionalisierungszusammensetzung auf oben angegebenen Temperaturbereich temperiert wird, da in Kombination mit dem additiven Fertigungsprozess so über den Auftrag von entweder quellenden Harzen oder erhitzten Thermoplasten eine innige Verbindung der Funktionalisierung mit der Folie erreicht werden kann. Es können durch diese thermische Konditionierung fest haftenden Funktionalisierungszusammensetzungen auf vielen Folienzusammensetzungen erreicht werden. Dies ist beispielsweise auch ohne weitere Maßnahmen zur Verbesserung der Haftung, beispielsweise durch das Aufbringen weiterer haftungsverbessernder Substanzen, möglich. Besonders bevorzugt kann die Temperatur T ≥ -20°C und ≤ +150°C, des Weiteren bevorzugt ≥ -5 und ≤ +100°C bezogen auf die Glasübergangstemperatur betragen. Bezogen auf die haftverbessernde Substanz beträgt die Temperatur T bevorzugt ≥ +10° C und ≤ +150° C des T_{g} der haftverbessernden Substanz.

Bevorzugt ist das 3D-Druckverfahren in Schritt c) ausgewählt aus FFF-, Inkjetting- oder SLS-Verfahren. Mittels dieser Verfahren lassen sich besonders präzise und flexible Strukturen ablegen, welche eine besonders effektive Haftung auf der Werkstückoberfläche zeigen. Die Funktionalisierungszusammensetzungen haften mittels dieser Verfahren auch in schwierigen Geometrien und es ist ebenfalls möglich, die Funktionalisierung besonders dünn auszugestalten.

In einer bevorzugten Ausführungsform des Verfahrens ist das polymere Material der Funktionalisierungszusammensetzung ausgesucht aus der Gruppe beststehend aus Polyurethan, Polycarbonat, Polyester, Polyamid, Polyetherimid, Polyetherketon, Polyimid, Polyoxymethylen, Polysilikon, thermoplastischen Elastomeren, Polyurethan, Polyacrylat enthaltende Thermosetmaterialien oder Mischungen raus mindestens zwei hieraus. Diese Materialien haben sich zur Funktionalisierung auch besonders herausfordernder Werkstückoberflächengeometrien als besonders geeignet erwiesen. Die abgelegten Funktionalisierungszusammensetzungen mit diesen Materialien erweisen sich gelichzeitig als besonders flexibel und mechanisch fest, sodass Funktionalisierungen mit einer langen Lebensdauer erhältlich sind. Besonders bevorzugt können dabei Thermosetmaterialien mit einem Tg < 20°C verwendet werden. In einer weiteren Ausgestaltung können bevorzugt auch Thermosetmaterialien mit einem Tg > 50°C bevorzugt verwendet werden.

In einer bevorzugten Ausgestaltung des Verfahrens erfolgt in Schritt d) der Stoff- oder Formschluss zwischen Werkstückoberfläche und funktionalisierte Folie über einen Thermoverformungsschritt. Insbesondere die Kopplung zwischen mechanischen und thermischen Kräften kann zu einer besonders guten Haftung zwischen der funktionalisierten Folienseite und der Werkstückoberfläche beitragen. Ohne durch die Theorie gebunden zu sein kann die erhöhte Temperatur zu einer gesteigerten Flexibilität der funktionalisierten Folie beitragen, welches den Verformungsschritt erleichtert und über den nach dem Erkalten sich einstellenden Schrumpf zu einer besseren Haftung beider Komponenten aufeinander beiträgt. Besonders bevorzugt kann die Temperatur im Thermoverformungsschritt in einem Bereich von ≥ -50°C bis ≤ 100°C, des Weiteren bevorzugt ≥ - 10°C bis ≤ 50°C bezogen auf die Erweichungstemperatur der Folie (gemessen als Schmelzpunkt bzw. als Glasübergangspunkt in Abwesenheit eines Schmelzpunktes mittels DSC bei einer Aufheizrate von 10°C/Minute) liegen.

Das Thermo- oder Warmformen ist ein Verfahren zur Umformung thermoplastischer Kunststoffe unter Wärmeeinwirkung sowie mit Hilfe von Druckluft oder Vakuum. Das Verfahren wird zum Teil auch als "Vakuumtiefziehen" oder einfach "Tiefziehen" bezeichnet.

Man unterscheidet die Thermoformverfahren nach dem jeweils eingesetzten Halbzeug: Dünnere Halbzeuge werden Folien genannt, dickere (ab ca. 1,5-2 mm) Platten. Folien-Halbzeuge können auf großen (bis Ø 1,8 m) Rollen den Thermoformautomaten zugeführt werden. Dabei wird typischerweise Folie von großen Rollen an den Folienbahnkanten in sogenannten Stachelketten geführt. Die noch harte kalte Folie wird so dem Formautomaten zuerst zugeführt und dann taktweise hindurchgeleitet. In einer Aufwärmstation werden Heizstrahler über industrielle Heizungssteuerungen angesteuert und die Folie so ein- oder beidseitig erwärmt. Die warme, jetzt weichere Folie wird in den Stachelführungen dabei leicht auseinandergezogen, damit sie nicht so stark durchhängt. In der Werkzeugstation wird die Folie mittels Spannrahmen festgehalten, Vorstrecker und das Thermoformwerkzeug fahren durch die Folienebene hindurch und geben die fertige Kontur schon grob vor. Dann kommt Druckluft von der einen und Vakuum von der anderen Seite, um die Folie rasch und stark an die wassergekühlte Wandung (Kontur) des Aluminiumformwerkzeuges zu bringen. Durch kleine Löcher und/oder breite Schlitze entweicht die Luft zwischen Folie und Aluminiumwerkzeug. Die erkaltete, nun feste Folie wird von dem Formwerkzeug getrennt und im nächsten Arbeitstakt gegebenenfalls der Ausstanzstation zugeführt. Dort werden die Außenmaße oder auch Löcher in das fertige Werkstück gestanzt.

Mit Schiebern, Klapp- und Drehkernen lassen sich auch komplexe Designs realisieren. Gestanzt werden kann auch in mehr als nur einer Ebene. Es können nach diesem Verfahren Monofolien sowie mehrschichtige Folien verarbeitet werden. Grundsätzlich lassen sich sämtliche Thermoplaste in diesem Verfahren verarbeiten. Aus Talkum verstärktem PE können beispielsweise großdimensionierte Kotflügel hergestellt werden. ABS mit Acryldeckschicht kann für Verkleidungen verwendet werden, die starken Witterungseinflüssen ausgesetzt sind oder mit Chemikalien in Verbindung kommen. Eine gewisse elektrische Leitfähigkeit von Kleinladungsträgern kann durch Zugabe von Rußpartikeln bewirkt werden. Auch das Verformen von Hochleistungskunststoffen wie PEEK ist möglich.

Neben dem klassischen Anwendungsbereich Verpackungen findet das Thermoforming Anwendungen im industriellen Bereich. Als Alternative zum Spritzguss zeichnet es sich durch günstige Werkzeugkosten aus und ist besonders bei kleinen und mittleren Serien besonders wirtschaftlich. Beispiele für Thermoformteile sind Hauben und Verkleidungen aller Art für den Maschinen- und Anlagenbau, für Agrar- und Baumaschinen, Flurförderzeuge und dem Nutzfahrzeugbau. Im Konsumgüterbereich ist die Anwendung u. a. bei der Herstellung von Kühl- und Gefriergeräten zu erwähnen. Hier werden die Innenbehälter und die Innenverkleidung der Türen durch Thermoformen hergestellt. Auch zur Herstellung von Zubehör in der Kfz-Branche wird heutzutage dieses Verfahren angewandt, wie z. B. bei der Produktion von Kofferraumwannen.

Aus Materialien wie z. B. Polyurethanschaum oder Glasfasermatten, werden akustisch und thermisch isolierende Bauelemente z. B. für die Automobilindustrie hergestellt. Weitere Anwendungen von Thermoverformten Folien finden sich im Bereich Dentaltechnik und verschiedensten medizinischen und Orthopädie anwendungen.

In einer weiteren, bevorzugten Ausgestaltung des Verfahrens wird die funktionalisierte Folie vor oder während des Thermoverformungsschrittes auf eine Temperatur von ≥ 5°C oberhalb ihrer Wärmeformbeständigkeitstemperatur (HDT) aufgeheizt. Um einen möglichst passgenauen Schluss zwischen Folie und Werkstückoberfläche zu bekommen, hat sich oben angegebener Temperaturbereich als besonders geeignet erwiesen. Dieser ermöglicht eine hinreichende Flexibilität der Folie und der Funktionalisierungszusammensetzung, verhindert aber gleichzeitig eine zu starke thermische Beanspruchung der durch 3D-Druck erhalten Strukturen. In weiteren Ausgestaltungen kann die Folie vor dem Thermoverformungsschritt auf eine Temperatur ≥ 10°C, des Weiteren bevorzugt ≥ 25°C, weiterhin ≥ 50°C oberhalb der Wärmeformbeständigkeitstemperatur (HDT) gemessen nach DIN EN ISO 75-1 bis 3 Verfahren B aufgeheizt werden. Weiterhin bevorzugt ist, dass in diesem Schritt unter den genannten Bedingungen die Funktionalisierungszusammensetzung und die Folie einen Unterschied in der Wärmeformbeständigkeit (HDT) gemessen nach DIN EN ISO 75-1 bis 3 Verfahren B von ≥ 5 °C und ≤ 200 °C aufweisen.

In einer Ausführungsform des Verfahrens wird bevorzugt entweder die funktionalisierte Folienseite oder die Werkstückoberfläche vor dem Schritt d) zumindest teilweise mit einer Haftschicht versehen. Zweckmäßigerweise kann auf die Folie mit der aufgedruckten Funktionalisierungszusammensetzung eine Haftschicht als Haftvermittlerschicht aus dem gleichen Kunststoffmaterial wie die Funktionalisierungszusammensetzung aufgebracht werden. Die beim dreidimensionalen Drucken aufgebrachte Funktionalisierungszusammensetzung kann die Haftvermittlerschicht anschmelzen und sich sicher mit ihr verbinden. Die Haftvermittlerschicht stellt dabei also dieselben Eigenschaften zur Verfügung wie eine mit der Funktionalisierungszusammensetzung zuvor gedruckte Lage der Funktionalisierung, sodass die danach gedruckte Lage der Funktionalisierung mit der Haftvermittlerschicht genauso wie mit einer zuvor gedruckten Lage der Funktionalisierung zu einer Einheit verschmelzen können. Es ist dabei nicht zwingend notwendig, für die Haftvermittlerschicht den gleichen Kunststoff wie für die Funktionalisierung zu verwenden. Wesentlich ist, dass sich die Kunststoffe gut verbinden können. Es können also auch Kunststoffe aus verwandten Stoffklassen oder Kunststoffe mit ähnlichen Polaritäten verwendet werden. Alternativ kann auch eine Lage aus einem wärmeaktivierbaren Klebstoff auf die gedruckte Funktionalisierung aufbringen. Geeignete Klebstoffe sind in diesem Zusammenhang generell alle thermoplastischen Materialien. Für Kunststoffmassen aus Acrylnitril-Butadien-Styrol-Copolymerisat (ABS) oder Polycarbonat (PC) oder ABS-PC sind beispielsweise Klebstoffe auf Basis von Polyvinylchlorid (PVC), Polyurethan, Polyvinalyacetat oder auf Basis von Acrylaten oder Klebstoffe auf Basis von Mischungen aus PVC und Acrylaten möglich.

Zweckmäßigerweise weist die Haftvermittlerschicht eine Schichtdicke von 0,005 mm bis 0,2 mm, bevorzugt von 0,01 mm bis 0,1 mm auf. Damit können die aus dem dreidimensionalen Druck resultierenden Unebenheiten besonders gut ausgeglichen und eine gute Haftung zur Werkstückoberfläche erzeugt werden. Bevorzugt kann der Kleber vor dem Verformungsschritt auf die Folie, auf die Werkstückoberfläche oder auf beide Oberflächen aufgetragen werden.

In einer weiteren bevorzugten Ausführungsform ist der Klebstoff ein thermisch aktivierbarer Klebstoff. Diese Klebstoffe lassen sich sehr individuell einsetzen und als Funktion des gewählten Temperaturprofils lassen sich die Haftungsstärke und der Ort der Haftung sehr präzise steuern.

Gemäß einer bevorzugten Charakteristik des Verfahrens beinhaltet die Funktionalisierungszusammensetzung neben dem polymeren Material noch Funktionalisierungszusätze ausgewählt aus der Gruppe bestehend aus leifähigen Materialien, Farbstoffen, Pigmenten, Füllstoffen, Fasern oder Mischungen daraus. Das erfindungsgemäße Verfahren ist hinreichend flexibel, sodass über den 3D-Druckschritt vielfältige funktionale Eigenschaften in die Folie und in die Werkstückoberfläche integriert werden können. Aus diesem Grund können noch weitere Stoffe in die Funktionalisierungszusammensetzung eingebaut werden, welche beispielsweise die mechanischen Eigenschaften der Funktionalisierungszusammensetzung und damit auch der Folie und der Werkstückoberfläche beeinflussen können. Es kann sich aber auch um reine Farbzusätze handeln, welche den Anwender das Auffinden der funktionalisierten Oberflächenstellen erleichtern.

In einer bevorzugten Ausführungsform des Verfahrens umfasst die Funktionalisierung der Folie in Schritt c) das Aufdrucken von Befestigungsmitteln auf die Folie. Weiterhin hat es sich als besonders geeignet herausgestellt, dass mittels 3D-Druck zur Funktionalisierung der Folie mindestens Befestigungsmittel aufgedruckt werden. Diese Befestigungsmittel können bevorzugt in komplementäre Haltemittel auf der Werkstückoberfläche eingreifen und so zu einer verbesserten Haftung der Folie auf der Werkstückoberfläche beitragen. Es lassen sich auch schwierige Werkstückoberflächengeometrien und sogar unterschiedliche Spannungen in unterschiedlichen Foliensegmenten realisieren. Das Verfahren lässt sich durch die unterschiedliche Möglichkeit zur Positionierung der Befestigungsmittel flexibel handhaben. So lassen sich beispielsweise als Funktion der verwendeten Folienmaterialien oder als Funktion der Dicke der Funktionalisierungszusammensetzung unterschiedlich hohe Befestigungsmittel andenken, welche bedarfsgerecht in Haltemittel auf der Werkstückoberfläche eingreifen können. Unter Haltemittel lassen sich beispielsweise Stifte, Haken, Ösen, Führungen verstehen, welchen komplementäre Haltemittel oder Gegenhaltemittel auf der Werkstückoberfläche entgegenstehen.

In einer bevorzugten Ausgestaltung des Verfahrens erfolgt der 3D-Druck mit flüssigen reaktiven Substanzen, wobei die Substanzen ein Quellungsmittel oder Lösungsmittel für die Folie umfassen und wobei die Folie in Kontakt von > 8h mit den Quellungsmitteln oder Lösungsmitteln > eine Flächengewichtszunahme von > 2%, bevorzugt > 5% zeigt. Durch die punktuelle Quellung der Folie mit dem Reaktivmaterial des 3D Drucks werden besonders gute Anhaftungswerte erzeugt. Alternativ kann das Reaktivmaterial mit der Folie auch unter Ausbildung von VanderWaals Bindungen, Wasserstoffbrückenwechselwirkungen, ionischen Wechselwirkungen oder unter Knüpfung von chemischen Verbindungen reagieren.

Des Weiteren erfindungsgemäß ist ein Werkstück mit einer funktionalisierten Oberfläche, wobei das Werkstück nach dem erfindungsgemäßen Verfahren hergestellt wurde. Mittels des erfindungsgemäßen Verfahrens lassen sich flexibel und kostengünstig, individualisierte oder individuell funktionalisierte Werkstücke herstellen, welche sich durch eine besonders effiziente Haftung zwischen der Funktionalisierung, in Form einer mittels 3D-Druck funktionalisierten Folie, und der eigentlichen Werkstückoberfläche auszeichnen. Über die Trennung der einzelnen Herstellungsschritte lässt sich zudem die Logistik für die Herstellung der einzelnen Werkstücke vereinfachen, welches zu einer Kostenersparnis führen kann. Für die weiteren Vorteile der individualisiert funktionalisierten Wertstücke sei explizit auf die für das erfindungsgemäße Verfahren genannten Vorteile verwiesen.

In einer bevorzugten Ausführungsform kann das Werkstück ein Interieurbauteil eines Fahrzeuges ausgewählt aus der Gruppe bestehend aus Flugzeugen, Schienenfahrzeugen, Kraftfahrzeugen sein. Das erfindungsgemäßen Verfahren und die erfindungsgemäß funktionalisierten Werkstückoberflächen eignen sich insbesondere für stark beanspruchte Oberflächen wie sie beispielsweise in oben angegebenen Anwendungsfeldern auftreten. Hier können sich die Vorteile des Verfahrens und der Werkstücke in langlebigen und sicher anwendbaren Funktionalisierungen niederschlagen, welche zudem individuell und flexibel herstellbar sind.

In einer bevorzugten Ausgestaltung des Werkstücks kann die Haftung zwischen Folie und Funktionalisierungszusammensetzung gemessen nach DIN ISO 55529:2012-09 erfolgen, wobei eine dem Test gemäße Prüffläche, sowie eine überstehende Lasche, die in einem T-Peeltest abgezogen werden kann, auf die Folie gedruckt wird. Erfindungsgemäß werden dabei bevorzugt Haftwerte von > 0,1 N/mm, bevorzugt > 0,3 N/mm, bevorzugt > 0,5 N/mm erhalten. Dieser Haftbereich ermöglicht eine hinreichende Flexibilität im Verformungsschritt und eine ausreichende Langzeithaftung, sodass die Funktionalität der Oberfläche ausreichend lange erhalten bleibt.

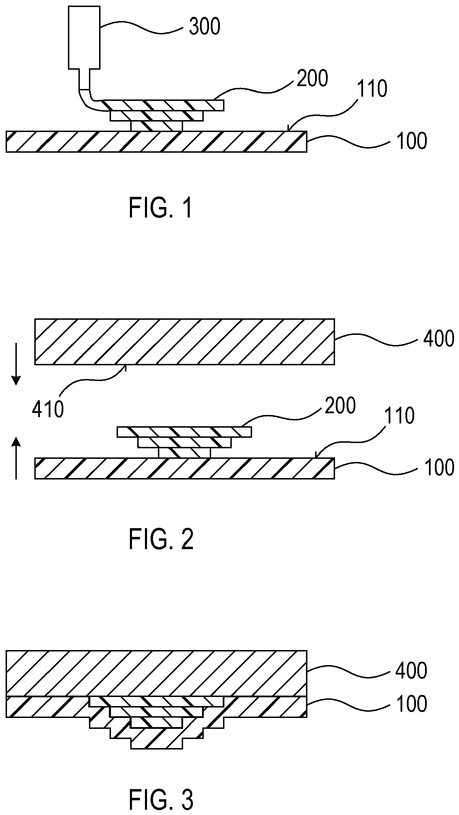

Die Erfindung wird anhand der nachfolgenden Figuren näher erläutert, ohne jedoch darauf beschränkt zu sein. FIG. 1 bis 3 zeigen schematisch Schritte im erfindungsgemäßen Verfahren.

FIG. 1 zeigt eine Folie 100 mit einer designierten Folienseite 110. Auf diese Folienseite 110 wird mittels eines FDM-Druckkopfs 300 lagenweise, in einem additiven Fertigungsverfahren, eine Mehrzahl von Schichten einer Funktionalisierungszusammensetzung 200 aufgebracht.

FIG. 2 zeigt die Situation nach Abschluss des FDM-Drucks. Die mit den Lagen 200 funktionalisierte Seite 110 der Folie 100 wird mit einem Werkstück 400, welches eine designierte Werkstückoberfläche 410 aufweist, in Verbindung gebracht. Zeichnerisch ist dieses durch das Aufeinanderzubewegen der Folie 100 und des Werkstücks 400 dargestellt. Diejenige Seite 110 der Folie 100, auf welcher die Funktionalisierungszusammensetzung 200 aufgebracht wurde, ist hierbei dem Werkstück 400 zugewandt.

FIG. 3 zeigt die Situation nach dem Zusammenfügen von funktionalisierter Folie 100 und Werkstück 400. Beispielhaft sei eine stoffschlüssige Verbindung zwischen Werkstückoberfläche 410 (s. FIG. 2) und Folienoberfläche 110 (s. FIG. 2) durch Heißverpressen unter teilweisem Verfließen der Folie 100 genannt. Die Konturen der Schichten 200 zeichnen sich dabei auf der Oberfläche 410 (s. FIG. 2) des funktionalisierten Werkstücks 400 ab.

## Patentansprüche

1. Verfahren zur Funktionalisierung einer Werkstückoberfläche (410), wobei
das Verfahren mindestens die folgenden Schritte umfasst:
a) Bereitstellen eines Werkstücks (400);
b) Bereitstellen einer Folie (100) mit mindestens zwei Folienseiten (110);
c) Funktionalisierung mindestens einer Folienseite (110) durch ortsselektives Aufbringen einer Funktionalisierungszusammensetzung (200) umfassend ein polymeres Material mittels eines 3D-Druckverfahrens in einer oder mehreren Schichten auf mindestens einen Teil der mindestens einen Folienseite (110);
d) Ausbildung eines Stoff- oder Formschlusses zwischen mindestens einem Teil der Werkstückoberfläche (410) und der in Schritt c) funktionalisierten Folie (100) durch Kontaktieren der Folie mit mindestens einem Teil der Werkstückoberfläche (410), wobei der Stoff- oder Formschluss zur Werkstückoberfläche (410) mit einer funktionalisierten Folienseite (110) erfolgt, so dass die Funktionalisierungszusammensetzung (200) zwischen der Werkstückoberfläche (410) und der Folie (100) angeordnet ist.

2. Verfahren nach Anspruch 1, wobei die Wärmeformbeständigkeitstemperatur (HDT) gemessen nach DIN EN ISO 75-1 bis 3 Verfahren B der gedruckten Funktionalisierungszusammensetzung ≥ 5°C und ≤ 200°C höher liegt als die Wärmeformbeständigkeitstemperatur der Folie.

3. Verfahren nach einem der vorhergehenden Ansprüche, wobei die Folie zur Funktionalisierung in Schritt c) plan ausgerichtet ist.

4. Verfahren nach einem der Ansprüche 1 oder 2, wobei die Folie vor der Funktionalisierung in Schritt c) über eine Form gespannt wird, wobei die Formoberfläche eine Spiegelsymmetrie zur Werkstückoberfläche aufweist.

5. Verfahren nach einem der vorhergehenden Ansprüche, wobei die Schichtdicke der abgelegten Funktionalisierungszusammensetzung größer als die Schichtdicke der Folie ist.

6. Verfahren nach einem der vorhergehenden Ansprüche, wobei die Folie durch einen thermischen Verfahrensschritt während oder vor der Funktionalisierung im Schritt c) auf eine Temperatur T bezogen auf die Glasübergangstemperatur der Folie (T_{g}) temperiert wird, die in einem Bereich von 5°C unterhalb T_{g} bis 200°C oberhalb T_{g} liegt.

7. Verfahren nach einem der vorhergehenden Ansprüche, wobei das 3D-Druckverfahren in Schritt c) ausgewählt ist aus FFF-, Inkjetting- oder SLS-Verfahren.

8. Verfahren nach einem der vorhergehenden Ansprüche, wobei das polymere Material der Funktionalisierungszusammensetzung ausgesucht ist aus der Gruppe beststehend aus Polyurethan, Polycarbonat, Polyester, Polyamid, Polyetherimid, Polyetherketon, Polyimid, Polyoxymethylen, Polysilikon, Thermoplastischen Elastomeren, Polyurethan, Polyacrylat enthaltende Thermosetmaterialien oder Mischungen daraus.

9. Verfahren nach einem der vorhergehenden Ansprüche, wobei in Schritt d) der Stoff- oder Formschluss zwischen Werkstückoberfläche und funktionalisierter Folie über einen Thermoverformungsschritt erfolgt.

10. Verfahren nach Anspruch 9, wobei die funktionalisierte Folie vor oder während des Thermoverformungsschrittes auf eine Temperatur von ≥ 5°C oberhalb ihrer Wärmeformbeständigkeitstemperatur (HDT) aufgeheizt wird.

11. Verfahren nach einem der vorhergehenden Ansprüche, wobei entweder die funktionalisierte Folienseite und / oder die Werkstückoberfläche vor dem Schritt d) zumindest teilweise an der Kontaktstelle zwischen Folie und Werkstück mit einer Haftschicht versehen wird.

12. Verfahren nach einem der vorhergehenden Ansprüche, wobei die Funktionalisierungszusammensetzung neben dem polymeren Material noch Funktionalisierungszusätze ausgewählt aus der Gruppe bestehend aus leifähigen Materialien, Farbstoffen, Pigmenten, Füllstoffen, Fasern oder Mischungen aus mindestens zwei hiervon enthält.

13. Verfahren nach einem der vorhergehenden Ansprüche, wobei die Funktionalisierung der Folie in Schritt c) das Aufdrucken von Befestigungsmitteln auf die Folie umfasst.

14. Werkstück mit einer funktionalisierten Oberfläche, hergestellt nach einem Verfahren nach einem der Ansprüche 1-13.

15. Werkstück nach Anspruch 14, wobei das Werkstück ein Interieurbauteil eines Fahrzeuges ausgewählt aus der Gruppe bestehend aus Flugzeugen, Schienenfahrzeugen, Kraftfahrzeugen ist.

## Claims

1. Process for the functionalization of a workpiece surface (410),
where
the process comprises at least the following steps:
a) provision of a workpiece (400);
b) provision of a film (100) with at least two film sides (110);
c) functionalization of at least one film side (110) by location-selective application of a functionalization composition (200) comprising a polymeric material by means of a 3D printing process in one or more layers onto at least one portion of the at least one film side (110);
d) bringing the film into contact with at least one portion of the workpiece surface (410) for development of a coherent or interlocking connection between at least one portion of the workpiece surface (410) and the film (100) functionalized in step c), the coherent or interlocking connection to the workpiece surface (410) being achieved with a functionalized film side (110), so that the functionalization composition (200) is arranged between the workpiece surface (410) and the film (100).

2. Process according to Claim 1, where the heat distortion temperature (HDT) measured in accordance with DIN EN ISO 75-1 to 3 method B of the printed functionalization composition is ≥ 5°C and ≤ 200°C higher than the heat distortion temperature of the film.

3. Process according to either of the preceding claims where, for the functionalization in step c), the film has been arranged to be flat.

4. Process according to either of Claims 1 and 2, where, before the functionalization in step c), the film is secured tautly across a former, where the surface of the former is a mirror image of the workpiece surface.

5. Process according to any of the preceding claims, where the layer thickness of the deposited functionalization composition is greater than the layer thickness of the film.

6. Process according to any of the preceding claims, where the film is controlled by a thermal process step during or before the functionalization in step c) to a temperature T which, in relation to the glass transition temperature of the film (T_{g}), is in a range of 5°C below T_{g} to 200°C above T_{g.}

7. Process according to any of the preceding claims, where the 3D printing process in step c) is selected from FFF processes, inkjetting processes or SLS processes.

8. Process according to any of the preceding claims, where the polymeric material of the functionalization composition is selected from the group consisting of polyurethane, polycarbonate, polyesters, polyamide, polyetherimide, polyetherketone, polyimide, polyoxymethylene, polysilicone, thermoplastic elastomers, polyurethane, polyacrylatecontaining thermoset materials, and mixtures thereof.

9. Process according to any of the preceding claims, where in step d) the coherent or interlocking connection between workpiece surface and functionalized film is achieved by way of a thermoforming step.

10. Process according to Claim 9, where before or during the thermoforming step the functionalized film is heated to a temperature that is ≥ 5°C above its heat distortion temperature (HDT).

11. Process according to any of the preceding claims, where before step d) a tie layer is provided to the functionalized film side and/or to the workpiece surface at least to some extent at the site of contact between film and workpiece.

12. Process according to any of the preceding claims, where the functionalization composition also comprises alongside the polymeric material, functionalized additions selected from the group consisting of conductive materials, dyes, pigments, fillers, fibers, and mixtures of at least two thereof.

13. Process according to any of the preceding claims, where the functionalization of the film in step c) comprises the application of fixing means to the film by printing.

14. Workpiece with a functionalized surface, produced by a process according to any of Claims 1-13.

15. Workpiece according to Claim 14, where the workpiece is an interior component of a vehicle selected from the group consisting of aircraft, rail vehicles and motor vehicles.

## Revendications

1. Procédé pour la fonctionnalisation d'une surface (410) de pièce à usiner, le procédé comprenant au moins les étapes suivantes :
a) disposition d'une pièce à usiner (400) ;
b) disposition d'un film (100) comportant au moins deux faces (110) de film ;
c) fonctionnalisation d'au moins une face (110) du film par application localement sélective d'une composition de fonctionnalisation (200) comprenant un matériau polymère, au moyen d'un procédé d'impression 3D en une ou plusieurs couches sur au moins une partie de ladite au moins une face (110) du film ;
d) formation d'un assemblage par liaison de matière ou par complémentarité de forme entre au moins une partie de la surface (410) de la pièce à usiner et le film (100) fonctionnalisé dans l'étape c), par mise en contact du film avec au moins une partie de la surface (410) de la pièce à usiner, l'assemblage par liaison de matière ou par complémentarité de forme avec la surface (410) de la pièce à usiner s'effectuant avec une face fonctionnalisée (110) du film, de sorte que la composition de fonctionnalisation (200) est disposée entre la surface (410) de la pièce à usiner et le film (100) .

2. Procédé selon la revendication 1, dans lequel la température de déformation à chaud (HDT), mesurée selon DIN EN ISO 75-1 à 3 Procédé B, de la composition de fonctionnalisation imprimée est supérieure de ≥ 5 °C et ≤ 200 °C à la température de déformation à chaud du film.

3. Procédé selon l'une quelconque des revendications précédentes, dans lequel le film dans la fonctionnalisation dans l'étape c) est orienté en plan.

4. Procédé selon l'une quelconque des revendications 1 et 2, dans lequel le film avant la fonctionnalisation dans l'étape c) est tendu sur une forme, la surface de la forme présentant une symétrie spéculaire avec la surface de la pièce à usiner.

5. Procédé selon l'une quelconque des revendications précédentes, dans lequel l'épaisseur de couche de la composition de fonctionnalisation déposée est supérieure à l'épaisseur de couche du film.

6. Procédé selon l'une quelconque des revendications précédentes, dans lequel le film est traité thermiquement par une étape thermique de processus pendant ou avant la fonctionnalisation dans l'étape c), à une température T, par rapport à la température de transition vitreuse du film (T_{g}), qui se situe dans une plage de 5 °C au-dessous de T_{g} à 200 °C au-dessus de T_{g}.

7. Procédé selon l'une quelconque des revendications précédentes, dans lequel le procédé d'impression 3D dans l'étape c) est choisi parmi les procédés FFF, jet d'encre ou SLS.

8. Procédé selon l'une quelconque des revendications précédentes, dans lequel le matériau polymère de la composition de fonctionnalisation est choisi dans le groupe constitué par un polyuréthane, polycarbonate, polyester, polyamide, polyétherimide, une polyéthercétone, un polyimide, polyoxyméthylène, polysilicone, les élastomères thermoplastiques, les matériaux thermodurcissables contenant un polyuréthane, un polyacrylate, ou des mélanges de ceux-ci.

9. Procédé selon l'une quelconque des revendications précédentes, dans lequel dans l'étape d) l'assemblage par liaison de matière ou par complémentarité de forme entre surface de la pièce à usiner et film fonctionnalisé s'effectue pendant une étape de thermoformage.

10. Procédé selon la revendication 9, dans lequel avant ou pendant l'étape de thermoformage le film fonctionnalisé est chauffé jusqu'à une température de ≥ 5 °C au-dessus de sa température de déformation à chaud (HDT).

11. Procédé selon l'une quelconque des revendications précédentes, dans lequel soit la face fonctionnalisée du film soit/et la surface de la pièce à usiner est/sont munie(s) avant l'étape d) d'une couche adhésive, au moins en partie sur le point de contact entre film et pièce à usiner.

12. Procédé selon l'une quelconque des revendications précédentes, dans lequel outre le matériau polymère la composition de fonctionnalisation contient encore des additifs de fonctionnalisation choisis dans le groupe constitué par des matériaux conducteurs, colorants, pigments, charges, fibres ou des mélanges d'au moins deux de tels additifs.

13. Procédé selon l'une quelconque des revendications précédentes, dans lequel la fonctionnalisation du film dans l'étape c) comprend l'application par impression d'agents de fixation sur le film.

14. Pièce à usiner comportant une surface fonctionnalisée, produite conformément à un procédé selon l'une quelconque des revendications 1-13.

15. Pièce à usiner selon la revendication 14, dans laquelle la pièce à usiner est un composant d'intérieur d'un véhicule choisi dans le groupe constitué par les aéronefs, les véhicules sur rail, les véhicules automobiles.
